# EUROPEAN PATENT APPLICATION

(11) **EP 4 492 568 A1**
(43) Date of publication of application: **15.01.2025**
(21) Application number: 23781197.1
(22) Date of filing: 10.03.2023
(51) Int. Cl.: H01Q 1/24, H01Q 1/48, H04M 1/02, G09F 9/30, G06F 1/16

(54) **ANTENNA STRUCTURE AND ELECTRONIC DEVICE COMPRISING SAME**

(30) Priority: 31.03.2022 KR 20220040206; 23.08.2022 KR 20220105574
(71) Applicant: Samsung Electronics Co., Ltd, Suwon-si, Gyeonggi-do 16677 (KR)
(72) Inventor: JUNG, Hojin, Suwon-si Gyeonggi-do 16677 (KR); KANG, Jooyoung, Suwon-si Gyeonggi-do 16677 (KR); KANG, Hyunggwang, Suwon-si Gyeonggi-do 16677 (KR); KIM, Moonsun, Suwon-si Gyeonggi-do 16677 (KR); KIM, Hyunsuk, Suwon-si Gyeonggi-do 16677 (KR); SEOL, Kyungmoon, Suwon-si Gyeonggi-do 16677 (KR); LEE, Wonho, Suwon-si Gyeonggi-do 16677 (KR); CHO, Hyoungtak, Suwon-si Gyeonggi-do 16677 (KR)
(74) Representative: Gulde & Partner
(86) International application number: PCT/KR2023/003305
(87) International publication number: WO 2023/191340

(57) **Abstract**

According to various embodiments of the present disclosure, an electronic device may comprise: a first housing including a first side surface portion having a first antenna formed thereon; a second housing configured to slide with respect to the first housing and including a second side surface portion having a second antenna formed thereon; a rollable display including a first display area and a second display area extending from the first display area and configured to allow at least a portion of the second display area to be moved based on the sliding movement of the second housing; and a linear motion guide including a rail disposed on an inner side of the first side surface portion, a head disposed on the outer side of the second side surface portion and slidably fastened to the rail, and a ball bearing disposed between the rail and the head, wherein the first antenna and the second antenna are configured to be electrically connected via the head and the rail.

## Description

### [Technical Field]

Various embodiments of the disclosure relate to an electronic device, e.g., an antenna structure and an electronic device including the same.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services.

### [Detailed Description of the Invention]

### [Technical Problem]

An electronic device (e.g., a portable terminal) may include a display having a flat surface or having a flat surface and a curved surface. An electronic device including a display may be limited in implementing a screen larger than the size of the electronic device due to the structure of the fixed display. Accordingly, research has been conducted on electronic devices including a rollable display.

In an electronic device including a rollable display, at least a portion of the rollable display may be unrolled or rolled when the housing of the electronic device is opened or closed so that the size of the display may be extended or shrunken. An electronic device including a rollable display may include a plurality of housings configured to slide relative to each other to extend or shrink the rollable display. For example, a housing of an electronic device including a rollable display may include a first housing and a second housing for guiding a sliding movement of the first housing.

In the electronic device including the rollable display, an antenna structure or an antenna radiator may be formed or disposed in each of the first housing and the second housing. At least one of the antenna structure or the antenna radiator formed in each of the first housing and the second housing is sealed or covered by the other housing when the housing is closed, making it difficult to sufficiently secure antenna performance. For example, in the closed state of the electronic device, the antenna structure or antenna radiator formed in the second housing is covered by the first housing not to be exposed to the outside, resulting in deterioration of the antenna performance.

According to various embodiments of the disclosure, there may be provided an antenna structure capable of securing antenna performance when the housing is closed and an electronic device including the same.

The disclosure is not limited to the foregoing embodiments but various modifications or changes may rather be made thereto without departing from the spirit and scope of the disclosure.

### [Technical Solution]

According to various embodiments of the disclosure, an electronic device may comprise a first housing including a first side portion in which a first antenna is formed, a second housing configured to slide with respect to the first housing and including a second side portion in which a second antenna is formed, a rollable display including a first display area and a second display area extending from the first display area, wherein at least a portion of the second display area is configured to be movable based on a sliding movement of the second housing, and a linear motion guide including a rail disposed on an inner side of the first side portion, a head disposed on an outer side of the second side portion and slidably fastened to the rail, and a ball bearing disposed between the rail and the head. The first antenna and the second antenna may be configured to be electrically connected to each other through the head and the rail.

According to various embodiments of the disclosure, an electronic device may comprise a first housing including a first antenna, a second housing including a second antenna and configured to slide with respect to the first housing, a display including a first display area and a second display area extending from the first display area, wherein at least a portion of the second display area is configured to be movable based on a sliding movement of the second housing, and a linear motion guide electrically connecting the first antenna of the first housing and a second antenna of the second housing. The linear motion guide may include a rail electrically connected to the first antenna and fixed to the first housing, a head electrically connected to the second antenna, fixed to the second housing, and slidably fastened to the rail, and a ball bearing disposed between the head and the rail, electrically connecting the head and the rail, and configured to assist a sliding movement of the head. The head may include a first ball groove recessed to contact at least a portion of the ball bearing, and the rail may include a second ball groove recessed to contact another portion different from the at least portion of the ball bearing.

According to various embodiments of the disclosure, an electronic device may comprise a first housing including a first side portion in which a first antenna is formed, a second housing including a second side portion in which a second antenna is formed and configured to slide with respect to the first housing, a display including a first display area and a second display area extending from the first display area, wherein at least a portion of the second display area is configured to be movable based on a sliding movement of the second housing, and a linear motion guide electrically connecting the first antenna of the first side portion and the second antenna of the second side portion. The linear motion guide may include a rail electrically connected to the first antenna and fixed to the first side portion, a head electrically connected to the second antenna, fixed to the second portion, and slidably fastened to the rail, and a ball bearing disposed between the head and the rail, electrically connecting the head and the rail, and configured to assist a sliding movement of the head. The second side portion may be disposed to be covered by the first side portion when the second housing is in a slide-in state with respect to the first housing and the second side portion may be disposed not to be at least partially covered by the first side portion when the second housing is in a slide-out state with respect to the first housing.

### [Advantageous Effects]

According to various embodiments of the disclosure, since the conductive portion of the first housing is maintained to be electrically connected to the conductive portion of the second housing, the antenna performance of the antenna radiator configured of the conductive portion of the second housing can be secured.

According to various embodiments of the disclosure, the ground structure of the antenna may be maintained in an open state or a closed state of the electronic device.

According to various embodiments of the disclosure, there may be provided an electronic device including an antenna structure capable of stably guiding a sliding movement of a second housing with respect to a first housing while implementing a ground structure of an antenna.

Effects obtainable from the disclosure are not limited to the above-mentioned effects, and other effects not mentioned may be apparent to one of ordinary skill in the art from the following description.

### [Brief Description of Drawings]

FIG. 1 is a block diagram illustrating an electronic device in a network environment according to an embodiment;
FIG. 2 is a view illustrating a state in which a second display area of a display is received in a housing according to an embodiment of the disclosure;
FIG. 3 is a view illustrating a state in which a second display area of a display is exposed to the outside of a housing according to an embodiment of the disclosure;
FIG. 4 is an exploded perspective view illustrating an electronic device according to an embodiment of the disclosure;
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
FIG. 6 is a perspective view illustrating a driving structure according to an embodiment of the disclosure;
FIG. 7A is a view illustrating a ground structure in a closed state of an electronic device according to various embodiments of the disclosure;
FIG. 7B is a view illustrating a ground structure in an open state of an electronic device according to various embodiments of the disclosure;
FIG. 8A is a perspective view illustrating a second cover member according to various embodiments of the disclosure;
FIG. 8B is a perspective view illustrating a first cover member in a closed state of an electronic device according to various embodiments of the disclosure;
FIG. 8C is a perspective view illustrating a first cover member in an open state of an electronic device according to various embodiments of the disclosure;
FIG. 9A is an assembled perspective view illustrating a linear motion guide according to various embodiments of the disclosure;
FIG. 9B is a side view illustrating a linear motion guide according to various embodiments of the disclosure;
FIG. 9C is a front view illustrating a linear motion guide according to various embodiments of the disclosure;
FIG. 9D is a cross-sectional view taken along line A-A of FIG. 9B according to various embodiments of the disclosure;
FIG. 10A is an exploded perspective view illustrating a linear motion guide according to various embodiments of the disclosure;
FIG. 10B is a perspective view illustrating a head of a linear motion guide according to various embodiments of the disclosure;
FIG. 10C is a perspective view illustrating a head and a ball bearing of a linear motion guide according to various embodiments of the disclosure;
FIG. 10D is a view illustrating an arrangement relationship between a ball bearing and a retainer of a linear motion guide according to various embodiments of the disclosure;
FIG. 10E is a perspective view illustrating a retainer of a linear motion guide according to various embodiments of the disclosure; and
FIG. 11 is a cross-sectional view illustrating a coupling relationship of a linear motion guide according to various embodiments of the disclosure.

### [Mode for Carrying out the Invention]

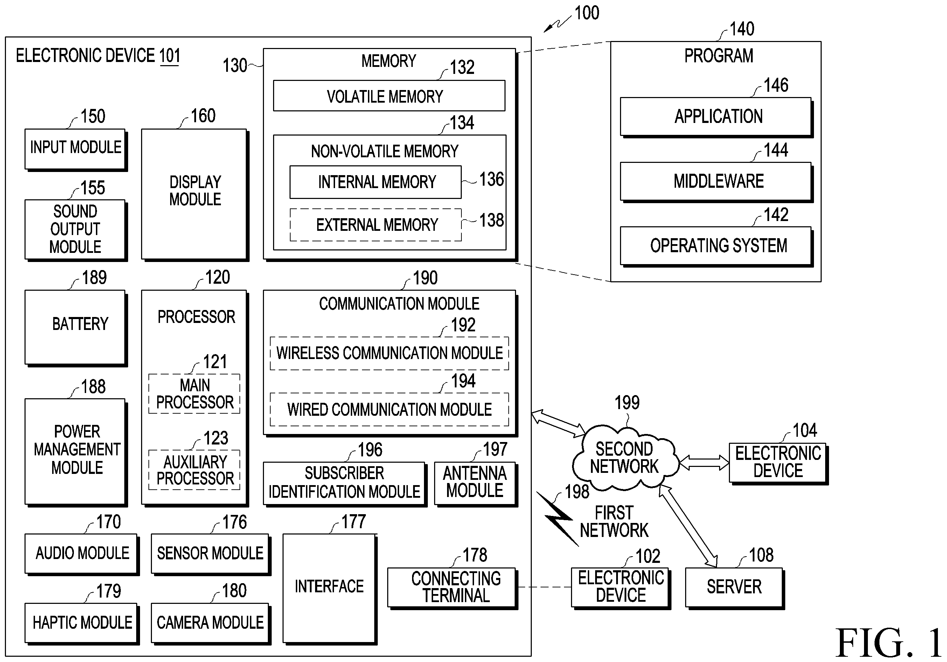

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™} wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

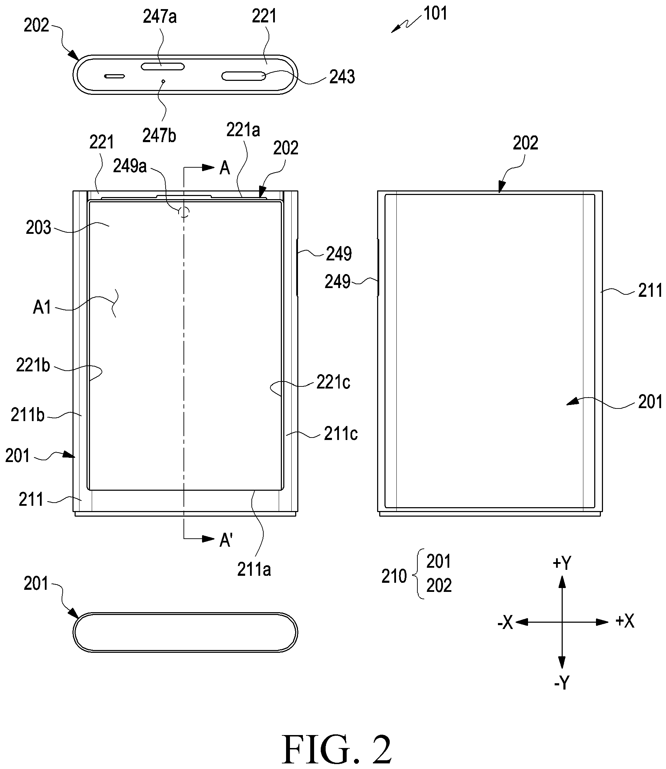

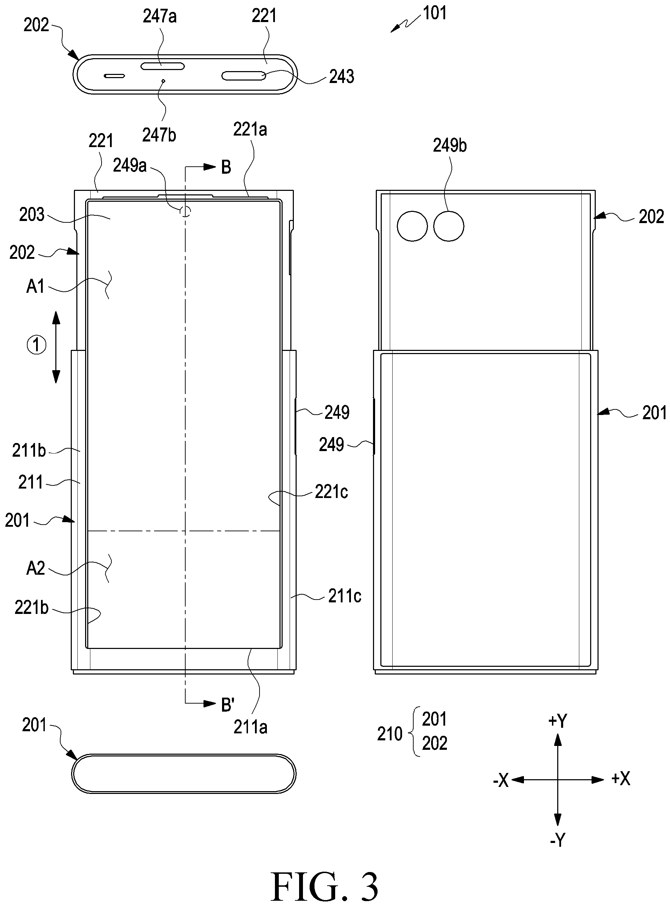

FIG. 2 is a view illustrating a state in which a second display area of a display is received in a housing according to an embodiment of the disclosure. FIG. 3 is a view illustrating a state in which a second display area of a display is exposed to the outside of a housing according to an embodiment of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is open.

Referring to FIGS. 2 and 3, the electronic device 101 may include a housing 210. The housing 210 may include a first housing 201 and a second housing 202 disposed to be movable relative to the first housing 201. According to an embodiment, the electronic device 101 may be interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow ①.

According to an embodiment, the second housing 202 may be referred to as a slide portion or a slide housing, and may be movable relative to the first housing 201. According to an embodiment, the second housing 202 may receive various electrical and electronic components, such as a circuit board or a battery.

According to an embodiment, the first housing 201 may receive a motor, a speaker, a sim socket, and/or a sub circuit board electrically connected with a main circuit board. The second housing 202 may receive a main circuit board on which electric components, such as an application processor (AP) and a communication processor (CP) are mounted.

According to an embodiment, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

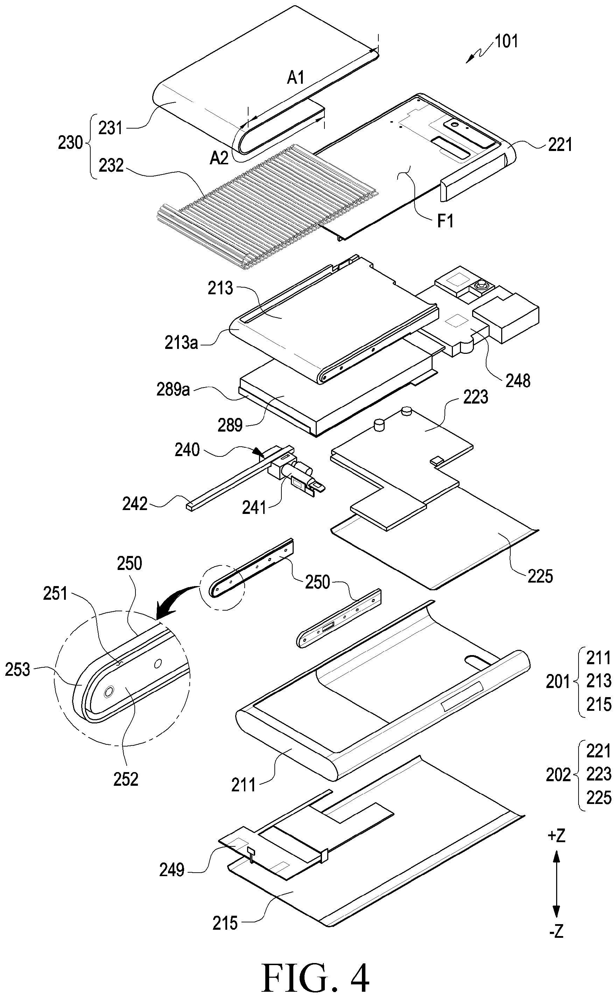

According to an embodiment, the 1-1th sidewall 211a, 1-2th sidewall 211b, and 1-3th sidewall 211c of the first cover member 211 may be formed to have a side opening (e.g., front opening) to receive (or surround) at least a portion of the second housing 202. For example, at least a portion of the second housing 202 may be surrounded by the first housing 201 and be slid in the direction parallel to the first surface (e.g., the first surface F1 of FIG. 4), e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing 202 moves in a first direction (e.g., direction ①) parallel to the 2-2th sidewall 211b or the 2-3th sidewall 211c, the slide-in state and slide-out state of the electronic device 101 may be formed. In the slide-in state of the electronic device 101, the second housing 202 may be positioned at a first distance from the 1-1th sidewall 211a of the first housing 201. In the slide-out state of the electronic device 101, the second housing 202 may move to be positioned at a second distance larger than the first distance from the 1-1th sidewall 211a of the first housing 201. In an embodiment, in the slide-in state of the electronic device 101, the first housing 201 may be formed to surround a portion of the 2-1th sidewall 221a.

According to an embodiment, the electronic device 101 may have an intermediate state between the slide-in state (e.g., fully opened state) of FIG. 2 and the slide-out state (e.g., fully closed state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully open state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) to the height (length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to various embodiments, the display 203 may include a first display area A1 and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 may extend from the first display area A1, and the second display area A2 may be received in the first housing 201 or visually exposed to the outside of the electronic device 101 as the second housing 202 slides relative to the first housing 201. According to an embodiment, as the electronic device 101 changes from the slide-out state to slide-in state, the display 203 may expand in the lower direction (e.g., -Y direction) of the electronic device 101. For example, in the slide-out state of the electronic device 101, the second display area A2 may be visually exposed under the display 203 (e.g., in the -Y direction). According to an embodiment, as the electronic device 101 changes from the slide-out state to slide-in state, the display 203 may extend in the upper direction (e.g., +Y direction) of the electronic device 101. For example, in the slide-out state of the electronic device 101, the second display area A2 may be visually exposed above the display 203 (e.g., in the +Y direction).

According to an embodiment, the second display area A2 may be received in the space positioned inside the first housing 201 or exposed to the outside of the electronic device while being substantially guided by one area (e.g., the curved surface 213a of FIG. 4) of the first housing 201. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to an embodiment, as viewed from above the second cover member 221 (e.g., front cover), if the electronic device 101 changes from the slide-in state to slide-out state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to an embodiment, the key input device 245 may be positioned in an area of the housing 210 (e.g., the first housing 201 and/or second housing 202). Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201. According to an embodiment, at least a portion of the key input device 245 may be disposed on the 2-1th sidewall 221a, the 2-2th sidewall 221b, and/or the 2-3th sidewall 221c of the second housing 202.

According to an embodiment, the connector hole 243 may be omitted or may receive a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing 201 and/or the second housing 202.

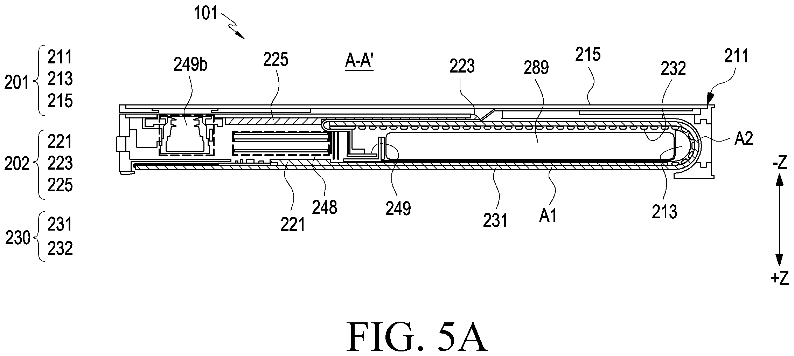

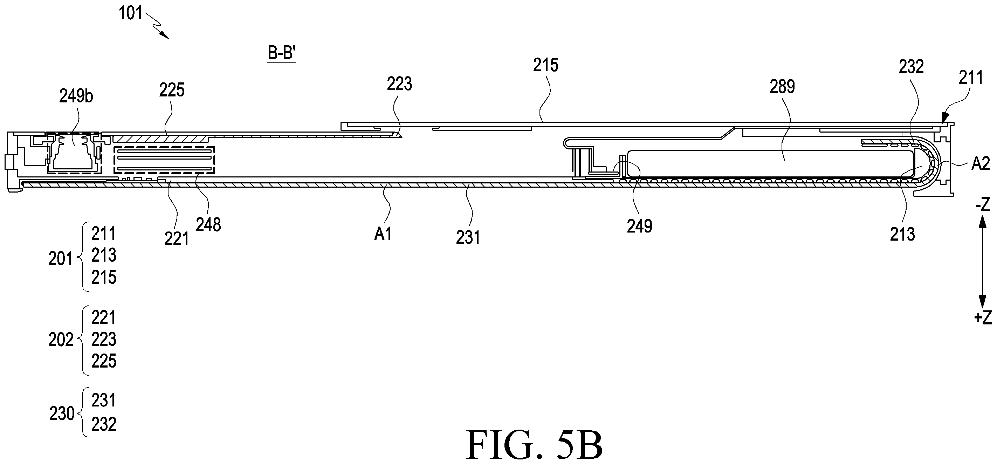

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225.

According to an embodiment, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module may be disposed in the first housing 201 and/or the second housing 202. For example, at least a portion of the sensor module may be positioned in the first housing 201, and another portion thereof may be positioned in the second housing 202.

FIG. 4 is an exploded perspective view illustrating an electronic device according to an embodiment of the disclosure.

FIG. 5A is a cross-sectional view taken along line A-A' of FIG. 2 according to an embodiment of the disclosure.

FIG. 5B is a cross-sectional view taken along line B-B' of FIG. 3 according to an embodiment of the disclosure.

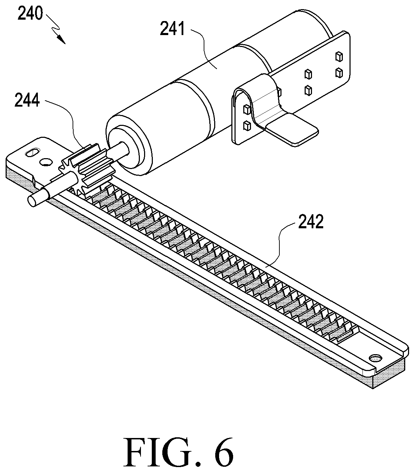

FIG. 6 is a perspective view illustrating a driving structure according to an embodiment of the disclosure.

Referring to FIGS. 4, 5A, 5B, and/or 6, an electronic device 101 may include a first housing 201, a second housing 202, a display assembly 230, and a driving structure 240. The configuration of the first housing 201, the second housing 202, and the display assembly 230 of FIGS. 4, 5A, and/or 5B may be identical in whole or part to the configuration of the first housing 201, the second housing 202, and the display 203 of FIGS. 2 and/or 3. The embodiment of FIG. 2 and/or 3 may be partially combined with the embodiment of FIGS. 4, 5A, 5B and/or 6. According to an embodiment, the first housing 201 may include a first cover member 211 (e.g., the first cover member 211 of FIGS. 2 and 3), a frame 213, and a first rear plate 215.

According to an embodiment, the first cover member 211 may receive at least a portion of the frame 213 and receive a component (e.g., battery 289) positioned in the frame 213. According to an embodiment, the first cover member 211 may be formed to surround at least a portion of the second housing 202. According to an embodiment, the first cover member 211 may protect the components (e.g., the second circuit board 249 and the frame 213) positioned in the first housing 201 from external impact. According to an embodiment, the second circuit board 249 receiving the electronic component (e.g., the processor 120 and/or the memory 130 of FIG. 1) may be connected to the first cover member 211.

According to an embodiment, the frame 213 may be connected to the first cover member 211. For example, the frame 213 may be connected to the first cover member 211. The second housing 202 is movable relative to the first cover member 211 and/or the frame 213. According to an embodiment, the frame 213 may receive the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved portion 213a facing the display assembly 230.

According to an embodiment, the first rear plate 215 may substantially form at least a portion of the exterior of the first housing 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow ① in FIG. 3).

According to an embodiment, the second cover member 221 may support at least a portion of the display 203. For example, the second cover member 221 may include a first surface F1. The first display area A1 of the display 203 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 receiving the electronic component (e.g., the processor 120 and/or the memory 130 of FIG. 1) may be connected to the second cover member 221. According to an embodiment, the second cover member 221 may protect the components (e.g., the first circuit board 248 and the rear cover 233) positioned in the second housing 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern for communicating with an external electronic device. For example, the rear cover 223 may include a laser direct structuring (LDS) antenna.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 203. According to an embodiment, the display 231 may be referred to as a flexible display, a foldable display, and/or a rollable display. According to an embodiment, the first display area A1 of the display 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display 231. According to an embodiment, as the second housing 202 slides, the multi-bar structure 232 may move with respect to the first housing 201. In the slide-in state of the electronic device 101 (e.g., FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing 202 relative to the first housing 201. For example, the drive structure 240 may include a motor 241 configured to generate a driving force for sliding the second housing 202 with respect to the first housing 201, for example. The driving structure 240 may include a gear 244 (e.g., a pinion) connected to the motor 241 and a rack 242 configured to mesh with the gear.

According to an embodiment, the housing in which the rack 242 is positioned and the housing in which the motor 241 is positioned may be different. According to an embodiment, the motor 241 may be connected to the second housing 202. The rack 242 may be connected to the first housing 201. According to another embodiment, the motor 241 may be connected to the first housing 201. The rack 242 may be connected to the second housing 202.

According to an embodiment, the motor 241 may be controlled by a processor (e.g., the processor 120 of FIG. 1). For example, the processor 120 may include a motor driver driving circuit and transfer a pulse width modulation (PWM) signal for controlling the speed of the motor 241 and/or the torque of the motor 241 to the motor 241. According to an embodiment, the motor 241 may be electrically coupled to a processor (e.g., the processor 120 of FIG. 1) positioned on the circuit board (e.g., the circuit board 204 of FIG. 4) using a flexible printed circuit board.

According to an embodiment, the second housing 202 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected to the antenna module and the communication module.

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing 201. The second circuit board 249 may be electrically connected to the first circuit board 248 through a connection flexible board. The second circuit board 249 may be electrically connected with electric components disposed in an end area of the electronic device 101, such as the battery 289 or a speaker and/or a sim socket, and may transfer signals and power. According to an embodiment, the second circuit board 249 may receive a wireless charging antenna (e.g., a coil) or be connected to the wireless charging antenna. For example, the battery 289 may receive power from an external electronic device through the wireless charging antenna. As another example, the battery 289 may transfer power to the external electronic device by the wireless charging antenna.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be position on the frame 213. For example, the battery 289 may be surrounded by the frame 213 and the battery cover 289a. According to another embodiment, it may be positioned within the second housing 202 and is slidable along with the second housing 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

According to an embodiment, the guide rail 250 may provide a force to the multi-bar structure 232 based on the driving of the motor 241.

According to an embodiment, when the electronic device 101 changes from the slide-in state to slide-out state, the inner portion 252 of the guide rail 250 may provide a force to the multi-bar structure 232. The multi-bar structure 232 receiving the force may be moved along the slit 251 of the guide rail 250, and the second housing 202 may be slid to extend relative to the first housing 201. At least a portion of the display assembly 230 received between the first cover member 211 and the frame 213 may extend to the front surface.

According to an embodiment, when the electronic device 101 changes from the slide-out state to slide-in state, the outer portion 253 of the guide rail 250 may provide a force to the bent multi-bar structure 232. The multi-bar structure 232 receiving the force may be moved along the slit 251 of the guide rail 250, and at least a portion of the second housing 202 may be slid to be received in the first housing 201. At least a portion of the display assembly 230 may be received between the first cover member 211 and the frame 213.

Referring to FIG. 5A, in the slide-in state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 231 may be minimized. For example, if the second housing 202 is completely received in the first housing 201, the first display area A1 of the display 231 may be visually exposed, and at least a portion (e.g., a portion along the -Z axis) of the second display area A2 may be disposed between the battery 289 and the first rear plate 215.

Referring to FIG. 5B, in the slide-out state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 231, together with the first display area A1, may be visually exposed to the outside of the electronic device 101.

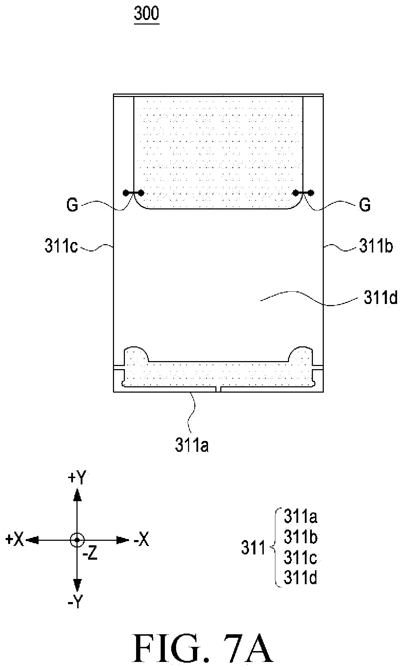

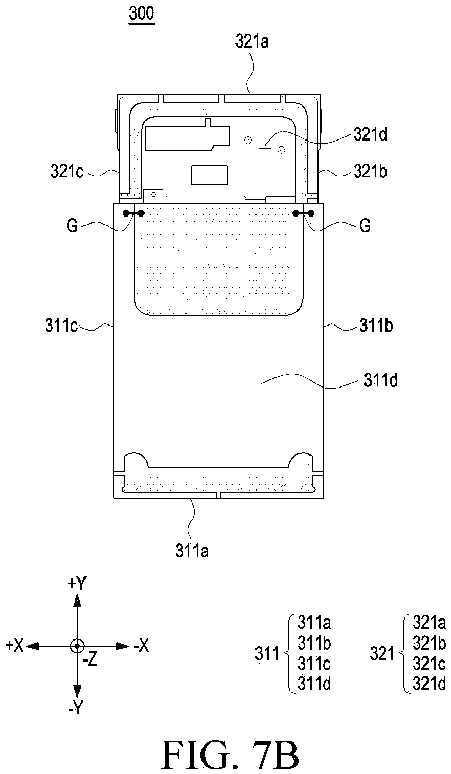

FIG. 7A is a view illustrating a ground structure in a closed state of an electronic device according to various embodiments of the disclosure. FIG. 7B is a view illustrating a ground structure in an open state of an electronic device according to various embodiments of the disclosure.

Referring to FIG. 7A and/or FIG. 7B, an electronic device 300 (e.g., the electronic device 101 of FIGS. 1 to 5) may include a second cover member 321, a first cover member 311, and a ground structure G.

The configuration of the second cover member 321 of FIGS. 7A and/or 7B may be identical in whole or part to the configuration of the second cover member 211 of FIGS. 2 to 4. The configuration of the first cover member 311 of FIG. 7A and/or FIG. 7B may be identical in whole or part to the configuration of the first cover member 221 of FIGS. 2 to 4.

According to various embodiments, the second cover member 321 may include a second flat portion 321d, a 2-1th sidewall 321a (e.g., the 2-1th sidewall 221a of FIGS. 2 and 3) connected to the second flat portion 321d, a 2-2th sidewall 321b (e.g., the 2-2th sidewall 221b of FIGS. 2 and 3) connected to the second flat portion 321d and disposed perpendicular to or extending from the 2-1th sidewall 321a, and/or a 2-3th sidewall 321c (e.g., the 2-3th sidewall 221c of FIGS. 2 and 3) connected to the second flat portion 321d and disposed perpendicular to or extending from the 2-1th sidewall 321a. According to an embodiment, the 2-2th sidewall 321b may be disposed parallel to the 2-3th sidewall 321c.

According to an embodiment, at least a portion of a first display area (e.g., the first display area A1 of FIG. 4) may be disposed on the second flat portion 321d. For example, at least a portion of the first display area may be adhered to one surface (e.g., a surface facing in the +Z direction in FIG. 4) of the second flat portion 321d.

According to various embodiments, in the closed state (e.g., FIG. 2 or FIG. 7A) of the electronic device 300, the 2-2th sidewall 321b may face the 1-2th sidewall 311b, and the 2-3th sidewall 321c may face the 1-3th sidewall 311c. For example, in the closed state (e.g., FIG. 2 or 7A) of the electronic device 300, the 1-2th sidewall 311b may cover at least a portion of the 2-2th sidewall 321b, and the 1-3th sidewall 311c may cover at least a portion of the 2-3th sidewall 321c.

According to various embodiments, the first cover member 311 may include a first flat portion 311d, a 1-1th sidewall 311a (e.g., the 1-1th sidewall 211a of FIGS. 2 and 3) connected to the first flat portion 311d, a 1-2th sidewall 311b (e.g., the 1-2th sidewall 211b of FIGS. 2 and 3) connected to the first flat portion 311d and disposed perpendicular to or extending from the 1-1th sidewall 311a, and/or a 1-3th sidewall 311c (e.g., the 1-3th sidewall 211c of FIGS. 2 and 3) connected to the first flat portion 311d and disposed perpendicular to or extending from the 1-1th sidewall 311a. According to an embodiment, the 1-2th sidewall 311b may be disposed parallel to the 1-3th sidewall 311c. According to an embodiment, a first rear plate (e.g., the first rear plate 215 of FIG. 4) may be coupled to one surface (e.g., a surface facing in the -Z direction of FIG. 3) of the first flat portion 311d.

According to various embodiments, in the closed state (e.g., FIG. 2 or FIG. 7A) of the electronic device 300, the 2-2th sidewall 321b may face the 1-2th sidewall 311b, and the 2-3th sidewall 321c may face the 1-3th sidewall 311c. For example, in the closed state (e.g., FIG. 2 or 7A) of the electronic device 300, the 1-2th sidewall 311b may cover at least a portion of the 2-2th sidewall 321b, and the 1-3th sidewall 311c may cover at least a portion of the 2-3th sidewall 321c.

According to various embodiments, at least one of the 2-2th sidewall 321b and the 2-3th sidewall 321c may include a second metal area including a metallic material (e.g., aluminum or stainless steel) and a second non-metal area including a non-metallic material (e.g., polymer).

According to an embodiment, the second metal area of the second cover member 321 may be electrically connected to a communication module (e.g., the communication module 190 of FIG. 1) and may be utilized as an antenna radiator (e.g., the antenna module 197 of FIG. 1) of the second cover member 321 or the electronic device 300. According to an embodiment, the second metal area may be defined and referred to as a second antenna. For example, the communication module may be electrically connected to the second metal area. According to an embodiment, the second metal area of the second cover member 321 may receive power from a circuit board (e.g., the first circuit board 248 of FIG. 4) or a battery (e.g., the battery 289 of FIG. 4) through a feeding line. According to an embodiment, the second metal area may be connected to a printed circuit board (e.g., the first circuit board 248 of FIG. 4) through a ground line, and at least a portion of the circuit board may be used as a ground for providing a reference potential.

According to various embodiments, at least one of the 1-2th sidewall 311b and the 1-3th sidewall 311c may include a first metal area including a metallic material (e.g., aluminum or stainless steel) and a first non-metal area including a non-metallic material (e.g., polymer).

According to an embodiment, the first metal area of the first cover member 311 may be electrically connected to a communication module (e.g., the communication module 190 of FIG. 1) and may be utilized as an antenna radiator (e.g., the antenna module 197 of FIG. 1) of the first cover member 311 or the electronic device 300. According to an embodiment, the first metal area may be defined and referred to as a first antenna. For example, the communication module may be electrically connected to the first metal area.

For example, when the electronic device 300 is in the closed state (e.g., FIG. 7A) or is in the slide-in state (e.g., FIG. 2 or 7A) of the second housing (e.g., the second housing 202 of FIGS. 2 and 3) with respect to the first housing (e.g., the first housing 201 of FIGS. 2 and 3), the second metal area of the 2-2th sidewall 321b and/or the 2-3th sidewall 321c of the second cover member 321 may be covered by the 1-2th sidewall 311b and/or the 1-3th sidewall 311c of the first cover member 311. Accordingly, as the second metal area (e.g., the second antenna) is covered by the 1-2th sidewall 311b and/or the 1-3th sidewall 311c, the second metal area (e.g., the second antenna) is covered by the 1-2th sidewall 311b and/or the 1-3th sidewall 311c in the closed state (e.g., FIG. 2 or 7A) of the electronic device 300, so that the antenna performance of the second metal area (e.g., the second antenna) may not be secured. For example, when the electronic device 300 is in the slide-in state (e.g., FIG. 2 or 7A), the 2-2th sidewall 321b and/or the 2-3th sidewall 321c of the second cover member 321 may be covered by the 1-2th sidewall 311b and/or the 1-3th sidewall 311c of the first cover member 311 so as not to be exposed to the outside of the first housing (e.g., the first cover member 311).

According to an embodiment, when the electronic device 300 is in the open state (e.g., FIG. 7B) or is in the slide-out state (e.g., FIG. 3 or FIG. 7B) of the second housing (e.g., the second housing 202 of FIGS. 2 and 3) with respect to the first housing (e.g., the first housing 201 of FIGS. 2 and 3), the second metal area of the 2-2th sidewall 321b and/or the 2-3th sidewall 321c of the second cover member 321 may be disposed so that at least a portion thereof is exposed to the outside of the first housing (e.g., the first cover member 311). For example, when the electronic device 300 is in the slide-out state (e.g., FIG. 3 or 7B), the 2-2th sidewall 321b and/or the 2-3th sidewall 321c of the second cover member 321 may be disposed so that at least a portion thereof is exposed to the outside of the first housing (e.g., the first cover member 311).

According to various embodiments, the electronic device 300 may include a ground structure G that electrically connects the second metal area of the second cover member 321 and the first metal area of the first cover member 311.

According to various embodiments, the ground structure G may electrically connect the second metal area (e.g., the second antenna) of the second cover member 321 and the first metal area (e.g., the first antenna) of the first cover member 311 to form a coupled inverted-F antenna (coupled IFA).

According to an embodiment, in the closed state of the electronic device 300 (e.g., FIG. 2 or FIG. 7A), the ground structure G may electrically connect an antenna radiator (e.g., the second antenna) including the 2-2th sidewall 321b of the second cover member 321 and the second metal area of the 2-3th sidewall 321c and an antenna radiator (e.g., the first antenna) including the 1-2th sidewall 311b of the first cover member 311 and the first metal area of the 1-3th sidewall 311c. According to an embodiment, in the closed state of the electronic device 300, power fed to the second metal area of the second cover member 321 through a circuit board (e.g., the first circuit board 248 of FIG. 4) may be transferred to the first metal area of the first cover member 311 through the ground structure G. According to an embodiment, in the closed state of the electronic device 300, power transferred to the first metal area of the first cover member 311 may be conducted to the first metal area (e.g., the first antenna) while radiating an antenna signal.

According to an embodiment, in the open state of the electronic device 300 (e.g., FIG. 3 or FIG. 7B), the ground structure G may electrically connect an antenna radiator (e.g., the second antenna) including the 2-2th sidewall 321b of the second cover member 321 and the second metal area of the 2-3th sidewall 321c and an antenna radiator (e.g., the first antenna) including the 1-2th sidewall 311b of the first cover member 311 and the first metal area of the 1-3th sidewall 311c. According to an embodiment, in the open state of the electronic device 300, power fed to the second metal area of the second cover member 321 through a circuit board (e.g., the first circuit board 248 of FIG. 4) may be transferred to the first metal area of the first cover member 311 through the ground structure G. According to an embodiment, in the open state of the electronic device 300, at least a portion of the power provided to the second cover member 321 may be conducted to the second metal area (e.g., the second antenna) to radiate an antenna signal, and the remaining portion of the power provided to the second cover member 321 may be transferred to the first cover member 311 to be conducted to the first metal area (e.g., the first antenna) of the first cover member 311 to radiate an antenna signal.

According to various embodiments, the ground structure G may radiate an antenna signal through the antenna radiator (e.g., the first antenna) formed in the first metal area in the closed state (e.g., FIG. 7A) of the electronic device 300, thereby preventing deterioration of antenna performance.

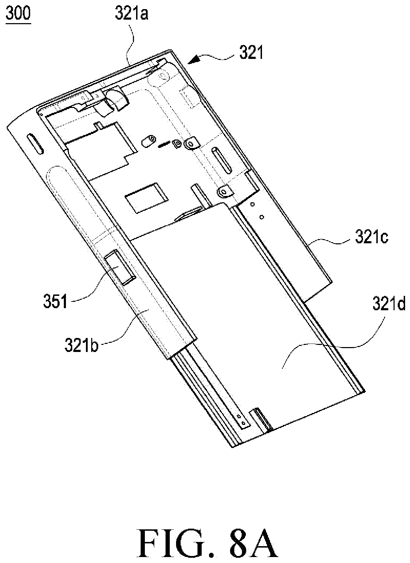

According to various embodiments, through the ground structure G (or the linear motion guide 350 of FIGS. 8A to 9D), the electronic device 300 may maintain an electrically connected state between the antenna radiator (e.g., the first antenna) formed of the first metal area and the antenna radiator (e.g., the second antenna) formed of the second metal area in the slide-in state (e.g., FIG. 2), the slide-out state (e.g., FIG. 3), or a sliding state (e.g., a state of switching from FIG. 2 to FIG. 3, or a state switching from FIG. 3 to FIG. 2) of the electronic device 300.

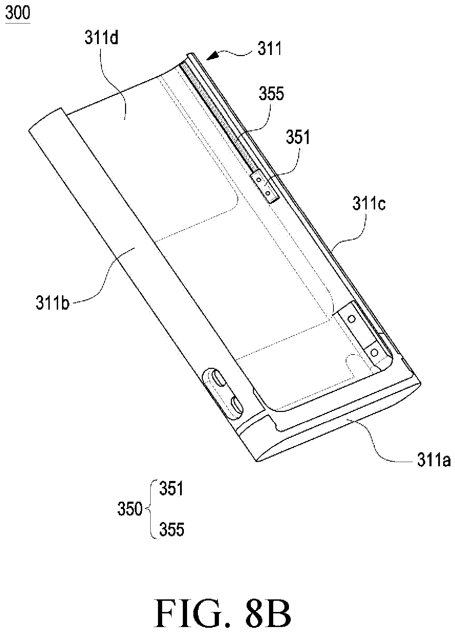

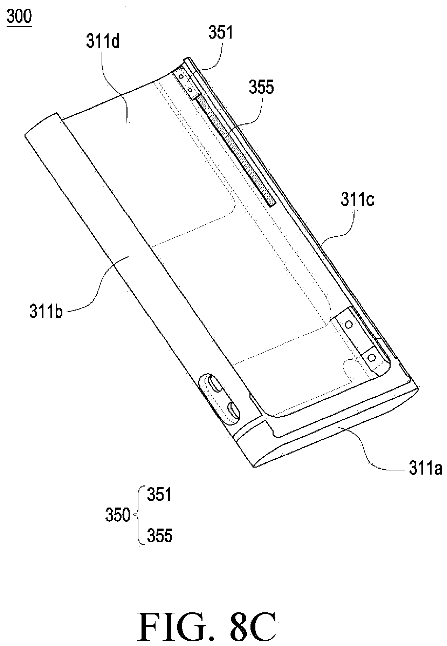

FIG. 8A is a perspective view illustrating a second cover member according to various embodiments of the disclosure. FIG. 8B is a perspective view illustrating a first cover member in a closed state of an electronic device according to various embodiments of the disclosure. FIG. 8C is a perspective view illustrating a first cover member in an open state of an electronic device according to various embodiments of the disclosure.

Referring to FIGS. 8A to 8C, an electronic device 300 (e.g., the electronic device 101 of FIGS. 1 to 5, or the electronic device 300 of FIGS. 7A to 7B) may include a second cover member 321, a first cover member 311, and a linear motion guide 350.

The configuration of the second cover member 321, the first cover member 311, and the linear motion guide 350 of FIGS. 8A to 8C may be identical in whole or part to the configuration of the first cover member 311, the second cover member 321, and the ground structure G of FIGS. 7A to 7B.

According to various embodiments, the second cover member 321 (e.g., the second cover member 321 of FIGS. 7A and 7B) may include a second flat portion 321d (e.g., the second flat portion 321d of FIGS. 7A and 7B), a 2-1th sidewall 321a (e.g., the 2-1th sidewall 321a of FIGS. 7A and 7B), a 2-2th sidewall 321b (e.g., the 2-2th sidewall 321b of FIGS. 7A and 7B), and a 2-3th sidewall 321c (e.g., the 2-3th sidewall 321c of FIGS. 7A to 5C).

According to an embodiment, the 2-2th sidewall 321b and the 2-3th sidewall 321c may include a second metal area (e.g., the second antenna) including a conductive portion.

According to various embodiments, the first cover member 311 (e.g., the first cover member 311 of FIGS. 7A and 7B) may include a first flat portion 311d (e.g., the first flat portion 311d of FIGS. 7A and 7B), a 1-1th sidewall 311a (e.g., the 1-1th sidewall 311a of FIGS. 7A and 7B), a 1-2th sidewall 311b (e.g., the 1-2th sidewall 311b of FIGS. 7A and 7B), and a 1-3th sidewall 311c (e.g., the 1-3th sidewall 311c of FIGS. 7A to 5C).

According to an embodiment, the 1-2th sidewall 311b and the 1-3th sidewall 311c may include a first metal area (e.g., the first antenna) including a conductive portion.

According to various embodiments, the electronic device 300 may further include a linear motion guide 350 (e.g., the ground structure G of FIGS. 7A and 7B) that electrically connects the first metal area and the second metal area. According to an embodiment, the linear motion guide 350 may include a head 351, a rail 355, and a ball bearing 353. According to an embodiment, the linear motion guide 350 may be defined and interpreted as a component for electrically connecting the first antenna and the second antenna.

According to various embodiments, the head 351 of the linear motion guide 350 may be coupled or connected to the second cover member 321. According to an embodiment, the head 351 may be coupled to at least a portion of the 2-2th sidewall 321b of the second cover member 321 and/or at least a portion of the 2-3th sidewall 321c of the second cover member 321. For example, a pair of heads 351 may be provided, and the pair of heads 351 may be coupled to an outer wall of the 2-2th sidewall 321b and an outer wall of the 2-3th sidewall 321c, respectively.

According to an embodiment, the head 351 may be electrically connected to the second metal area (e.g., the second antenna) of the second cover member 321. According to an embodiment, the head 351 may be configured to slide along the length direction of the rail 355 on the rail 355 of the linear motion guide 350.

According to various embodiments, the rail 355 of the linear motion guide 350 may be coupled to or connected to the first cover member 311. According to an embodiment, the rail 355 may be coupled to at least a portion of the 1-2th sidewall 311b of the first cover member 311 and/or at least a portion of the 1-3th sidewall 311c of the first cover member 311. For example, a pair of rails 355 may be provided, and the pair of rails 355 may be coupled to an inner wall of the 1-2th sidewall 311b and an inner wall of the 1-3th sidewall 311c, respectively.

According to an embodiment, the rail 355 may be electrically connected to a first metal area (e.g., the first antenna) of the first cover member 311. According to an embodiment, the rail 355 may be slidably fastened to the head 351 coupled to the second cover member 321.

According to an embodiment, when the electronic device 300 is changed from the closed state (e.g., FIG. 7A or 8B) to the open state (e.g., FIG. 7B or 8C), the second cover member 321 may slide in one direction (e.g., the +Y direction of FIG. 3) with respect to the first cover member 311, and the head 351 coupled to the second cover member 321 may slide in one direction (e.g., the +Y direction of FIG. 3) with respect to the rail 355.

According to an embodiment, when the electronic device 300 is changed from the open state (e.g., FIG. 7B or 8C) to the open state (e.g., FIG. 7A or 8B), the second cover member 321 may slide in the other direction (e.g., the -Y direction of FIG. 3) opposite to the one direction with respect to the first cover member 311, and the head 351 coupled to the second cover member 321 may slide in the other direction (e.g., the -Y direction of FIG. 3) with respect to the rail 355.

According to an embodiment, the linear motion guide 350 may assist or guide the sliding movement of the second cover member 321 with respect to the first cover member 311.

According to an embodiment, the head 351 may be electrically connected to the rail 355. Accordingly, the second metal area (e.g., the second antenna) of the second cover member 321 may be electrically connected to the first metal area of the first cover member 311 through the head 351 and the rail 355.

According to an embodiment, in the closed state of the electronic device 300 (e.g., FIG. 7B or FIG. 8C), the first metal area (e.g., the first antenna) of the first cover member 311 may receive power through the linear motion guide 350 and radiate an antenna signal. Accordingly, even in the closed state of the electronic device 300, antenna performance may not deteriorate.

According to various embodiments, in the open state of the electronic device 300 (e.g., FIG. 7A or 8B), the head 351 may be disposed between the second cover member 321 and the first cover member 311 so as not to be exposed to the outside of the electronic device 300.

According to an embodiment, the ground structure (e.g., the ground structure G of FIGS. 7A and 7B) may include a C-clip that electrically connects the second metal area of the second cover member 321 and the first metal area of the first cover member 311. When the ground structure is configured as a C-clip, the second metal area of the second cover member 321 and the first metal area of the first cover member 311 may be electrically connected to each other. However, due to the structure of the C-clip, friction against the sliding movement of the second cover member 321 may be formed or contact failure may occur.

In an embodiment, when the ground structure (e.g., the ground structure G of FIGS. 7A and 7B) is configured as the linear motion guide 350, the second metal area (e.g., the second antenna) of the second cover member 321 and the first metal area (e.g., the first antenna) of the first cover member 311 may be electrically connected to each other, the sliding movement of the second cover member 321 may be smoothly assisted, and the property of maintaining the electrical connection between the second metal area and the first metal area may be enhanced.

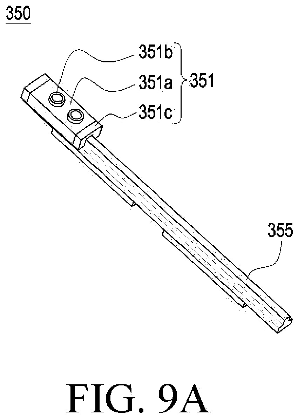

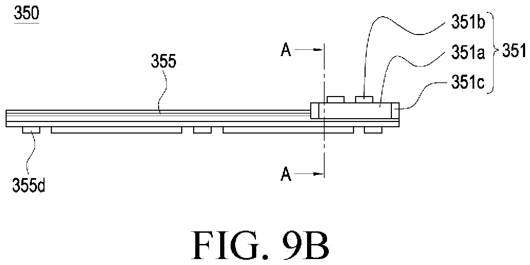

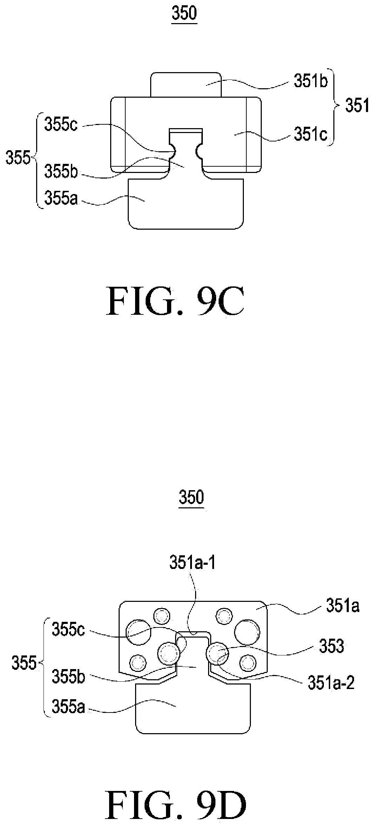

FIG. 9A is an assembled perspective view illustrating a linear motion guide according to various embodiments of the disclosure. FIG. 9B is a side view illustrating a linear motion guide according to various embodiments of the disclosure. FIG. 9C is a front view illustrating a linear motion guide according to various embodiments of the disclosure. FIG. 9D is a cross-sectional view taken along line A-A of FIG. 9B according to various embodiments of the disclosure.

Referring to FIGS. 9A to 9D, a linear motion guide 350 (e.g., the linear motion guide 350 of FIGS. 8A to 8C) may include a head 351, a rail 355, and a ball bearing 353.

The configuration of the head 351 and the rail 355 of FIGS. 9A to 9D may be identical in whole or part to the configuration of the head 351 and the rail 355 of FIGS. 8A to 8C.

According to various embodiments, the head 351 may include a first body portion 351a, a first protrusion 351b, and a cover portion 351c. According to an embodiment, the first body portion 351a may form the body of the head 351. According to an embodiment, a pair of cover portions 351c may be coupled or connected to one side of the first body portion 351a and the other side facing away from the one side, respectively.

According to an embodiment, the first body portion 351a may be configured to slide on the rail 355 and/or the second protrusion 355b of the rail 355. According to an embodiment, the first body portion 351a may include a guide groove 351a-1 recessed in at least a portion of the portion facing the rail 355. The guide groove 351a-1 may extend from the first body portion 351 along the extending direction of the rail 355. In an embodiment, the second protrusion 355b of the rail 355 may be inserted into the guide groove 351a-1.

According to an embodiment, the first body portion 351a may further include a first ball groove 351a-2 recessed in at least a portion of a side surface of the guide groove 351a-1. At least one ball bearing 353 may be inserted into and disposed in the first ball groove 351a-2. The first ball groove 351a-2 may extend from the first body portion 351 along the extending direction of the rail 355.

According to various embodiments, the first protrusion 351b may protrude from one surface of the first body portion 351a. In an embodiment, the first protrusion 351b may be defined and interpreted as a component separate from the first body portion 351a. In another embodiment, the first protrusion 351b may be defined and interpreted as a partial configuration of the first body portion 351a.

According to various embodiments, the first protrusion 351b may be inserted into a groove recessed in or a hole formed through the 2-2th sidewall (e.g., the 2-2th sidewall 311b of FIGS. 8A to 8C) and/or the 2-3th sidewall (e.g., the 2-3th sidewall 311c of FIGS. 8A to 8C) of the second cover member (e.g., the second cover member 321 of FIGS. 8A to 8C). In an embodiment, the first protrusion 351b may be fitted into the groove or the hole, and accordingly, the head 351 may be coupled, connected, or fixed to the 2-2th sidewall and/or the 2-3th sidewall of the second cover member (e.g., the second cover member 321 of FIG. 8A).

According to various embodiments, a pair of cover portions 351c may be provided, and the pair of body portions 351c may be coupled or connected to one side and the other side, respectively, of the first body portion 351a. According to various embodiments, the pair of cover portions 351c may be configured to prevent the ball bearing 353 inserted and disposed in the first ball groove 351a-2 of the first body portion 351a from escaping off. For example, the pair of cover portions 351c may close one side and the other side of the first ball groove 351a-2, thereby preventing the at least one ball bearing 353 inserted into and disposed in the first ball groove 351a-2 from escaping off from the ball groove 351a-2. For example, the cover portion 351c may be coupled to the first body portion 351a to cover the ball bearing 353.

According to various embodiments, the cover portion 351c may include a guide groove recessed in a shape corresponding to the shape of the second protrusion 355b of the rail 355. A second protrusion 355b may be inserted and disposed in the guide groove of the cover portion 351c.

According to various embodiments, the rail 355 may include a second body portion 355a, a second protrusion 355b, a second ball groove 355c, and a third protrusion 355d. According to an embodiment, the second body portion 355a may extend in the sliding direction (e.g., the Y-axis direction of FIG. 3) of the second cover member (e.g., the second cover member 311 of FIGS. 8A to 8C). According to an embodiment, the second body portion 355a may form the body of the rail 355.

According to an embodiment, the second protrusion 355b may protrude from one surface (e.g., a surface facing the head 351) of the second body portion 355a. In an embodiment, the second protrusion 355b may be defined and interpreted as a component separate from the second body portion 355a. In another embodiment, the second protrusion 355b may be defined and interpreted as a partial configuration of the second body portion 355a. According to an embodiment, the second protrusion 355b of the rail 355 may be fastened or connected to allow the head 351 to slide. According to an embodiment, the second protrusion 355b may extend along the extending direction of the second body portion 355a.

According to various embodiments, the second ball groove 355c may be a groove recessed in at least a portion of the side surface of the second protrusion 355b. The second ball groove 355c may contact at least one ball bearing 353. According to an embodiment, the second ball groove 355c may extend along the extending direction of the second body portion 355a.

According to various embodiments, the third protrusion 355d may protrude from at least a portion of the other surface (e.g., a surface facing away from the surface facing in the head 351) of the second body 355a. In an embodiment, the third protrusion 355d may be defined and interpreted as a component separate from the second body portion 355a. In another embodiment, the third protrusion 355d may be defined and interpreted as a partial configuration of the second body portion 355a.

According to various embodiments, the third protrusion 355d may be inserted and disposed in a groove recessed in or a hole formed through the 1-2th sidewall (e.g., the 1-2th sidewall 321b of FIGS. 8A to 8C) and/or the 1-3th sidewall (e.g., the 1-3th sidewall 321c of FIGS. 8A to 8C) of the first cover member (e.g., the first cover member 321 of FIGS. 8A to 8C). In an embodiment, the third protrusion 355d may be fitted into the groove or the hole, and accordingly, the rail 355 may be coupled, connected, or fixed to the first cover member (e.g., the first cover member 311 of FIGS. 8B to 8C).

According to various embodiments, the linear motion guide 350 may further include at least one ball bearing 353 disposed between the head 351 and the rail 355 and configured to assist the sliding movement of the head 351. In an embodiment, the ball bearing 353 may be defined and interpreted as a ball bearing.

According to various embodiments, at least a portion of each of the at least one ball bearing 353 may be inserted and disposed in the first ball groove 351a-2 to contact the first ball groove 351a-2, and the other portion may be inserted and disposed in the second ball groove 355c to contact the second ball groove 355c.

According to an embodiment, the at least one ball bearing 353 may be configured to assist the head 351 in smoothly or stably sliding on the rail 355 and to electrically connect the head 351 and the rail 355.

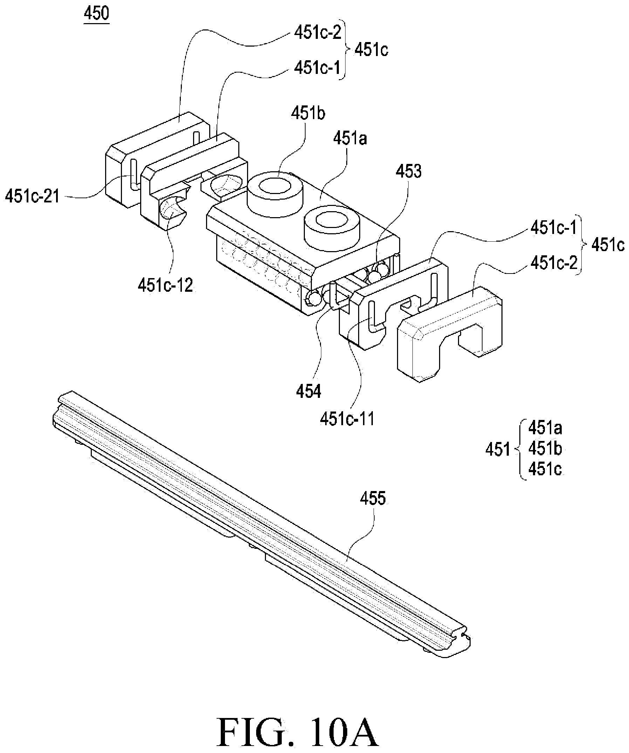

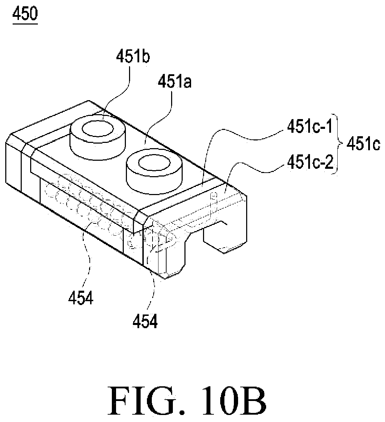

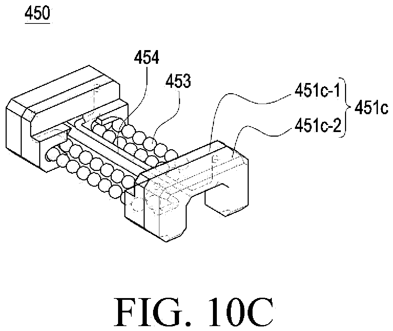

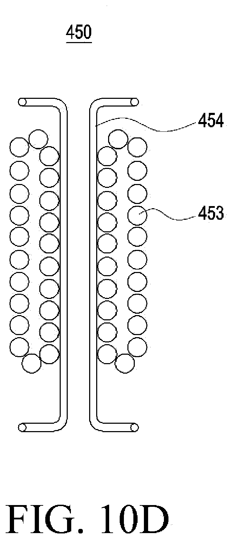

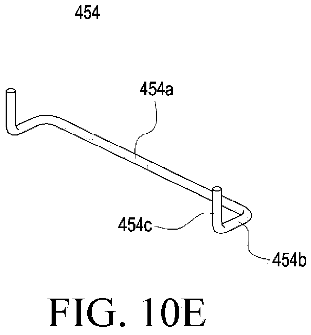

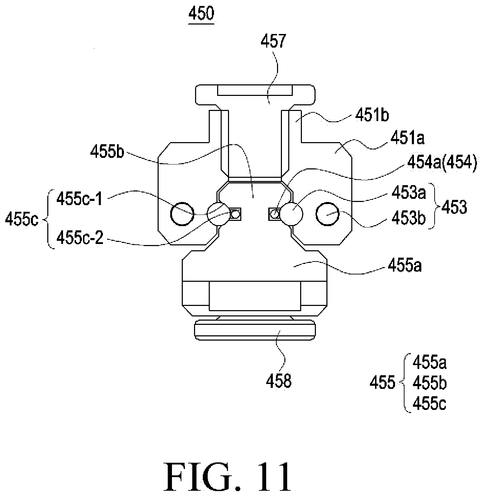

FIG. 10A is an exploded perspective view illustrating a linear motion guide according to various embodiments of the disclosure. FIG. 10B is a perspective view illustrating a head of a linear motion guide according to various embodiments of the disclosure. FIG. 10C is a perspective view illustrating a head and a ball bearing of a linear motion guide according to various embodiments of the disclosure. FIG. 10D is a view illustrating an arrangement relationship between a ball bearing and a retainer of a linear motion guide according to various embodiments of the disclosure. FIG. 10E is a perspective view illustrating a retainer of a linear motion guide according to various embodiments of the disclosure. FIG. 11 is a cross-sectional view illustrating a coupling relationship of a linear motion guide according to various embodiments of the disclosure.

Referring to FIGS. 10A to 11, a linear motion guide 450 (e.g., FIGS. 8A to 9D) may include a head 451, a rail 455, at least one ball bearing 453, and a retainer 454.

The configuration of the head 451, the rail 455, and the at least one ball bearing 453 of FIGS. 10A to 11 may be identical in whole or part to the configuration of the head 351, the rail 355, and the at least one ball bearing 353 of FIGS. 8A to 9D.

According to various embodiments, the head 451 (e.g., the head 351 of FIGS. 9A to 9D) may include a first body portion 451a (e.g., the first body portion 351a of FIGS. 9A to 9D), a first protrusion 451b (e.g., the first protrusion 351b of FIGS. 9A to 9D), and a cover portion 451c (e.g., the cover portion 351c of FIGS. 9A to 9D).

According to various embodiments, the cover portion 451c may include a first cover portion 451c-1 coupled to the first body portion 451a and a second cover portion 451c-2 coupled to the first cover portion 451c-1.

According to an embodiment, the first cover portion 451c-1 may be configured to prevent the at least one ball bearing 451c inserted and disposed inside the first body portion 451a from escaping off. For example, the first cover portion 451c-1 may be configured to cover the ball bearing 453. According to an embodiment, the first cover portion 451c-1 may include a ball slit 451c-12 recessed in at least a portion thereof. In an embodiment, the ball slit 451c-12 of the first cover portion 451c-1 may be configured to guide circulation of the at least one ball bearing 453. For example, when the at least one ball bearing 453 disposed in a ring shape or a loop shape inside the first body 451a is circulated inside the first body 451a, the at least one ball bearing 453 may move along the ball slit 451c-12.

According to various embodiments, the first cover portion 451c-1 may further include a retainer slit 451c-11 recessed in a portion different from the at least one portion. According to an embodiment, the retainer slit 451c-11 may be recessed in a shape corresponding to the second portion 454b and the third portion 454c of the retainer 454. In an embodiment, at least a portion (e.g., the second portion 454b and the third portion 454c) of the retainer 454 may be fixed to the retainer slit 451c-11 of the first cover portion 451c-1.

According to various embodiments, the second cover portion 451c-2 may be coupled to or connected to the first cover portion 451c-1. According to an embodiment, the second cover portion 451c-2 may be configured to cover at least a portion (e.g., the second portion 454b and the third portion 454c) of the retainer 454 fixed to the retainer slit 451c-11. According to an embodiment, at least a portion of the retainer 454 may be disposed between the first cover portion 451c-1 and the second cover portion 451c-2.

According to various embodiments, the rail 455 (e.g., the head 351 of FIGS. 9A to 9D) may include a second body portion 455a (e.g., the second body portion 355a of FIGS. 9A to 9D), a second protrusion 451b (e.g., the second protrusion 351b of FIGS. 9A to 9D), a second ball groove 455c-1 (e.g., the second ball groove 355c of FIGS. 9A to 9D), and a retainer groove 455c-2. According to an embodiment, the second ball groove 455c-1 and the retainer groove 455c-1 may be defined and/or interpreted as one groove 455c recessed in at least a portion of the second protrusion 451b.

According to an embodiment, the retainer groove 455c-2 may be a groove formed in at least a portion of the second ball groove 455c-1. In an embodiment, at least a portion (e.g., the first portion 454a of the retainer 454) of the retainer 454 may be inserted and disposed in the retainer groove 455c-2.

According to various embodiments, the at least one ball bearing 453 may be disposed inside the first body portion 451a. For example, the at least one ball bearing 453 may be disposed along a ring-shaped or loop-shaped path formed inside the first body portion 451a.

According to various embodiments, when the head 451 slides, the at least one ball bearing 453 may contact the second ball groove 455c-1 of the second protrusion 455b to be rotated (or spun) by the second ball groove 455c-1, and when the head 451 slides, the at least one ball bearing 453 may be rotated (or spun) along the ring shape or the loop shape on the path formed inside the first body 451a.

According to various embodiments, the retainer 454 may include a first portion 454a inserted and disposed in the retainer groove 455c-2 and extending along the extending direction of the rail 455, a second portion 454b bent from one end of the first portion 454a and then extending, and a third portion 454c bent from one end of the second portion 454b and then extending. According to an embodiment, the first portion 454a of the retainer 454 may be configured to prevent the at least one ball bearing 453 from escaping off. According to an embodiment, the second portion 454b and the third portion 454c of the retainer 454 may be fixed to the retainer slit 451c-11 of the first cover portion 451c-1. For example, the retainer 454 may be configured to cover at least a portion of the ball bearing 453.

According to various embodiments, the linear motion guide 450 may further include a first fastening member 457 and a second fastening member 458.

According to an embodiment, when the first protrusion 451b of the head 451 is disposed on the 1-2th sidewall (e.g., the 1-2th sidewall 311b of FIGS. 8A to 8C) and the 1-3th sidewall (e.g., the 1-3th sidewall 311c of FIGS. 8A to 8C) of the first cover member (e.g., the first cover member 311 of FIGS. 8A to 8C), the first fastening member 457 may include a bolt or pin for fixing the first cover member and the first protrusion 451b.

According to an embodiment, when the rail 455 and/or the third protrusion (e.g., the third protrusion 355d of FIGS. 9A to 9D) of the rail 455 is disposed on the 1-2th sidewall (e.g., the 1-2th sidewall 311b of FIGS. 8A to 8C) and the 1-3th sidewall (e.g., the 1-3th sidewall 311c of FIGS. 8A to 8C) of the first cover member (e.g., the first cover member 311 of FIGS. 8A to 8C), the second fastening member 458 may include a bolt or pin for fixing the first cover member and the rail 455.

According to various embodiments of the disclosure, an electronic device (e.g., the electronic device 101 of FIGS. 1 to 5B or the electronic device 300 of FIGS. 7A to 8C) may comprise a first housing (e.g., the first housing 201 of FIGS. 2 to 4, the first cover member 211 of FIG. 4, or the first cover member 311 of FIGS. 7A to 8C) including a first side portion (e.g., the 1-2th sidewall 211b or the 1-3th sidewall 211c of FIGS. 2 and 3 or the 2-2th sidewall 311b or the 2-3th sidewall 311c of FIGS. 7A to 8C) in which a first antenna is formed, a second housing (e.g., the second housing 202 of FIGS. 2 to 4, the second cover member 221 of FIG. 4, or the second cover member 321 of FIGS. 7A to 8C) configured to slide with respect to the first housing and including a second side portion (e.g., the 2-2th sidewall 221b or 2-3th sidewall 221c of FIGS. 2 and 3 or the 2-2th sidewall 321b or the 2-3th sidewall 321c of FIGS. 7A to 8C) in which a second antenna is formed, a rollable display (e.g., the display 203 of FIGS. 2 and 3 or the display assembly 230 of FIG. 4) including a first display area (e.g., the first display area A1 of FIGS. 2 to 4) and a second display area (e.g., the second display area A2 of FIGS. 2 to 4) extending from the first display area, wherein at least a portion of the second display area is configured to be movable based on a sliding movement of the second housing, and a linear motion guide (e.g., the linear motion guide 350 of FIGS. 8A to 9C) including a rail (e.g., the rail 355 of FIGS. 8A to 9C) disposed on an inner side of the first side portion, a head (e.g., the head 351 of FIGS. 8A to 9C) disposed on an outer side of the second side portion and slidably fastened to the rail, and a ball bearing (e.g., the ball bearing 353 of FIGS. 8A to 9C) disposed between the rail and the head. The first antenna and the second antenna may be configured to be electrically connected to each other through the head and the rail.

According to various embodiments, the first antenna and the second antenna may be configured to be electrically connected to each other through the head and the rail when the second housing is in a slide-out state or a slide-in state of the second housing with respect to the first housing.

According to various embodiments, when in the slide-out state, the head may be configured to be disposed between the first side portion and the second side portion and is configured not to be exposed to an outside.

According to various embodiments of the disclosure, the head may include a first body portion (e.g., the first body portion 351a of FIGS. 8A to 9C) slidably fastened to the rail, a first protrusion (e.g., the first protrusion 351b of FIGS. 8A to 9C) protruding from the first body portion and fixed to the second side portion, and a cover portion (e.g., the cover portion 351c of FIGS. 8A to 9C) coupled to the first body portion and configured to cover the ball bearing. The rail may include a second body portion (e.g., the second body portion 355a of FIGS. 8A to 9C) fixed to the first side portion and a second protrusion (e.g., the second protrusion 355b of FIGS. 8A to 9C) protruding from the second body portion and to which the first body portion is slidably fastened.

According to various embodiments of the disclosure, the first body portion may include a first ball groove (e.g., the first ball groove 351a-2 of FIGS. 8A to 9C) that is formed to be recessed from at least a portion of the first body portion and contacts at least a portion of the ball bearing, and the second protrusion may include a second ball groove (e.g., the second ball groove 355c of FIGS. 8A to 9C) that is formed to be recessed from at least a portion of the second protrusion and contacts another portion different from the at least portion of the ball bearing.

According to various embodiments of the disclosure, the rail may further include a third protrusion (e.g., the third protrusion 355d of FIGS. 8A to 9C) protruding from the second body portion and fixed to the first side portion.

According to various embodiments of the disclosure, the linear motion guide (e.g., the linear motion guide 450 of FIGS. 10A to 11) may further include a retainer (e.g., the retainer 454 of FIGS. 10A to 11) configured to cover at least a portion of the ball bearing (e.g., the ball bearing 453 of FIGS. 10A to 11).

According to various embodiments of the disclosure, the cover portion (e.g., the cover portion 451c of FIGS. 10A to 11) may include a first cover portion (e.g., the first cover portion 451c-1 of FIGS. 10A to 11) coupled to the first body portion (e.g., the first body portion 451a of FIGS. 10A to 11) and configured to cover the ball bearing, and a second cover portion (e.g., the second cover portion 451c-2 of FIGS. 10A to 11) coupled to the first cover portion, and at least a portion of the retainer may be disposed between the first cover portion and the second cover portion.

According to various embodiments of the disclosure, the first cover portion may include a retainer slit (e.g., the retainer slit 451c-11 of FIGS. 10A to 11) formed to be recessed from at least a portion of the first cover portion and configured for at least a portion of the retainer to be fixed therein.

According to various embodiments of the disclosure, the first cover portion may include a ball slit (e.g., the ball slit 451c-12 of FIGS. 10A to 11) recessed from at least a portion of the first cover portion and configured to guide a circulation of the ball bearing.

According to various embodiments of the disclosure, the second protrusion (e.g., the second protrusion 455b of FIGS. 10A to 11) may include a second ball groove (e.g., the second ball groove 455c-1 of FIGS. 10A to 11) recessed from at least a portion of the second protrusion and contacts at least a portion of the ball bearing and a retainer groove (e.g., the retainer groove 455c-2 of FIGS. 10A to 11) recessed from at least a portion of the second ball groove, and in which at least a portion of the retainer is disposed to be inserted.

According to various embodiments of the disclosure, the second side portion may be disposed not to be exposed to an outside of the first housing by being covered by the first side portion when the second housing is in a slide-in state of the second housing with respect to the first housing, and wherein the second side portion may be disposed to be at least partially exposed to the outside of the first housing when the second housing is in a slide-out state of the second housing with respect to the first housing.

According to various embodiments of the disclosure, the electronic device may further comprise a communication module (e.g., the communication module 190 of FIG. 1) electrically connected to at least one of the first antenna or the second antenna.

According to various embodiments of the disclosure, a plurality of ball bearings may be provided. The plurality of ball bearings may be disposed in a ring shape inside the head.

According to various embodiments of the disclosure, when the head slides on the rail, the plurality of ball bearings (e.g., the ball bearing 453 of FIG. 10d) may be configured to orbit along the ring shape, and wherein at least some of the plurality of orbiting ball bearings are configured to rotate in contact with the rail.

According to various embodiments of the disclosure, an electronic device (e.g., the electronic device 101 of FIGS. 1 to 5B or the electronic device 300 of FIGS. 7A to 8C) may comprise a first housing (e.g., the first housing 201 of FIGS. 2 to 4, the first cover member 211 of FIG. 4, or the first cover member 311 of FIGS. 7A to 8C) including a first antenna, a second housing (e.g., the second housing 202 of FIGS. 2 to 4, the second cover member 221 of FIG. 4, or the second cover member 321 of FIGS. 7A to 8C) including a second antenna and configured to slide with respect to the first housing, a display (e.g., the display 203 of FIGS. 2 and 3 or the display assembly 230 of FIG. 4) including a first display area (e.g., the first display area A1 of FIGS. 2 to 4) and a second display area (e.g., the second display area A2 of FIGS. 2 to 4) extending from the first display area, wherein at least a portion of the second display area is configured to be movable based on a sliding movement of the second housing, and a linear motion guide electrically connecting the first antenna of the first housing and a second antenna of the second housing. The linear motion guide (e.g., the linear motion guide 350 of FIGS. 8A to 9C) may include a rail (e.g., the rail 355 of FIGS. 8A to 9C) electrically connected to the first antenna and fixed to the first housing, a head (e.g., the head 351 of FIGS. 8A to 9C) electrically connected to the second antenna, fixed to the second housing, and slidably fastened to the rail, and a ball bearing (e.g., the ball bearing 353 of FIGS. 8A to 9C) disposed between the head and the rail, electrically connecting the head and the rail, and configured to assist a sliding movement of the head. The head may include a first ball groove (e.g., the first ball groove 351a-2 of FIGS. 8A to 9C) recessed to contact at least a portion of the ball bearing, and the rail may include a second ball groove (e.g., the second ball groove 355c of FIGS. 8A to 9C) recessed to contact another portion different from the at least portion of the ball bearing.

According to various embodiments, the rail may be fixed to an inner wall (e.g., the inner wall of the 1-2th sidewall 211b of FIGS. 2 and 3, the inner wall of the 1-2th sidewall 211c or the inner wall of the 1-2th sidewall 311b of FIGS. 7A to 8C, the inner wall of the 1-2th sidewall 311c) of the first housing, and the head may be fixed to a portion facing the inner wall of the first housing, of the outer wall (e.g., the outer wall of the 2-2th sidewall 221b of FIGS. 2 and 3, the outer wall of the 2-3th sidewall 221c or the outer wall of the 2-2th sidewall 321c of FIGS. 7A to 8C, the outer wall of the 2-3th sidewall 322c) of the second housing.

According to various embodiments of the disclosure, the second antenna may be disposed not to be exposed an outside of the first housing by being covered by the first housing when the second housing is in a slide-in state with respect to the first housing, and the second housing may be disposed to be at least partially exposed to the outside of the first housing when the second housing is in a slide-out state with respect to the first housing.

According to various embodiments of the disclosure, the head may include a first body portion (e.g., the first body portion 351a of FIGS. 8A to 9C) slidably fastened to the rail, a first protrusion (e.g., the first protrusion 351b of FIGS. 8A to 9C) protruding from the first body portion and fixed to the second housing, and a cover portion (e.g., the cover portion 351c of FIGS. 8A to 9C) coupled to the first body portion and configured to cover the ball bearing. The rail may include a second body portion (e.g., the second body portion 355a of FIGS. 8A to 9C) fixed to the first housing and a second protrusion (e.g., the second protrusion 355b of FIGS. 8A to 9C) protruding from the second body portion, on which the first body portion is slidably fastened.

According to various embodiments of the disclosure, an electronic device (e.g., the electronic device 101 of FIGS. 1 to 5B or the electronic device 300 of FIGS. 7A to 8C) may comprise a first housing (e.g., the first housing 201 of FIGS. 2 to 4, the first cover member 211 of FIG. 4, or the first cover member 311 of FIGS. 7A to 8C) including a first side portion (e.g., the 1-2th sidewall 211b or the 1-3th sidewall 211c of FIGS. 2 and 3 or the 2-2th sidewall 311b or the 2-3th sidewall 311c of FIGS. 7A to 8C) in which a first antenna is formed, a second housing (e.g., the second housing 202 of FIGS. 2 to 4, the second cover member 221 of FIG. 4, or the second cover member 321 of FIGS. 7A to 8C) including a second side portion (e.g., the 2-2th sidewall 221b or 2-3th sidewall 221c of FIGS. 2 and 3 or the 2-2th sidewall 321b or the 2-3th sidewall 321c of FIGS. 7A to 8C) in which a second antenna is formed, and configured to slide with respect to the first housing, a display (e.g., the display 203 of FIGS. 2 and 3 or the display assembly 230 of FIG. 4) including a first display area (e.g., the first display area A1 of FIGS. 2 to 4) and a second display area (e.g., the second display area A2 of FIGS. 2 to 4) extending from the first display area, wherein at least a portion of the second display area is configured to be movable based on a sliding movement of the second housing, and a linear motion guide electrically connecting the first antenna of the first side portion and the second antenna of the second side portion. The linear motion guide (e.g., the linear motion guide 350 of FIGS. 8A to 9C) may include a rail (e.g., the rail 355 of FIGS. 8A to 9C) electrically connected to the first antenna and fixed to the first side portion, a head (e.g., the head 351 of FIGS. 8A to 9C) electrically connected to the second antenna, fixed to the second portion, and slidably fastened to the rail, and a ball bearing (e.g., the ball bearing 353 of FIGS. 8A to 9C) disposed between the head and the rail, electrically connecting the head and the rail, and configured to assist a sliding movement of the head. The second side portion may be disposed to be covered by the first side portion when the second housing is in a slide-in state with respect to the first housing and the second side portion may be disposed not to be at least partially covered by the first side portion when the second housing is in a slide-out state with respect to the first housing.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device, comprising:
a first housing including a first side portion in which a first antenna is formed;
a second housing configured to slide with respect to the first housing and including a second side portion in which a second antenna is formed;
a rollable display including a first display area and a second display area extending from the first display area, wherein at least a portion of the second display area is configured to be movable based on a sliding movement of the second housing; and
a linear motion guide including a rail disposed on an inner side of the first side portion, a head disposed on an outer side of the second side portion and slidably fastened to the rail, and a ball bearing disposed between the rail and the head,
wherein the first antenna and the second antenna are configured to be electrically connected to each other through the head and the rail.

2. The electronic device of claim 1, wherein the first antenna and the second antenna are configured to be electrically connected to each other through the head and the rail when the second housing is in a slide-out state or a slide-in state with respect to the first housing.

3. The electronic device of claim 2, wherein when in the slide-out state, the head is disposed between the first side portion and the second side portion and is configured not to be exposed to an outside.

4. The electronic device of claim 1, wherein the head includes a first body portion slidably fastened to the rail, a first protrusion protruding from the first body portion and fixed to the second side portion, and a cover portion coupled to the first body portion and configured to cover the ball bearing, and
wherein the rail includes a second body portion fixed to the first side portion and a second protrusion protruding from the second body portion and to which the first body portion is slidably fastened.

5. The electronic device of claim 4, wherein the first body portion includes a first ball groove that is formed to be recessed from at least a portion of the first body portion and contacts at least a portion of the ball bearing, and
wherein the second protrusion includes a second ball groove that is formed to be recessed from at least a portion of the second protrusion and contacts another portion different from the at least portion of the ball bearing.

6. The electronic device of claim 4, wherein the rail further includes a third protrusion protruding from the second body portion and fixed to the first side portion.

7. The electronic device of claim 4, wherein the linear motion guide further includes a retainer configured to cover at least a portion of the ball bearing.

8. The electronic device of claim 7, wherein the cover portion includes a first cover portion coupled to the first body portion and configured to cover the ball bearing, and a second cover portion coupled to the first cover portion, and
wherein at least a portion of the retainer is disposed between the first cover portion and the second cover portion.

9. The electronic device of claim 8, wherein the first cover portion includes a retainer slit formed to be recessed from at least a portion of the first cover portion and configured for at least a portion of the retainer to be fixed therein.

10. The electronic device of claim 8, wherein the first cover portion includes a ball slit recessed from at least a portion of the first cover portion and configured to guide a circulation of the ball bearing.

11. The electronic device of claim 8, wherein the second protrusion includes:
a second ball groove recessed from at least a portion of the second protrusion and contacts at least a portion of the ball bearing; and
a retainer groove recessed from at least a portion of the second ball groove, and in which at least a portion of the retainer is disposed to be inserted.

12. The electronic device of claim 1, wherein the second side portion is disposed not to be exposed to an outside of the first housing by being covered by the first side portion when the second housing is in a slide-in state with respect to the first housing, and wherein the second side portion is disposed to be at least partially exposed to the outside of the first housing when the second housing is in a slide-out state with respect to the first housing.

13. The electronic device of claim 1, further comprising a communication module electrically connected to at least one of the first antenna or the second antenna.

14. The electronic device of claim 1, wherein a plurality of ball bearings are provided, and wherein the plurality of ball bearings are disposed in a ring shape inside the head.

15. The electronic device of claim 14, wherein when the head slides on the rail, the plurality of ball bearings are configured to orbit along the ring shape, and
wherein at least some of the plurality of orbiting ball bearings are configured to rotate in contact with the rail.
